(19) Europäisches Patentamt
European Patent Office
Office européen des brevets

(11) **EP 4 748 236 A1**

(12) **EUROPEAN PATENT APPLICATION**
published in accordance with Art. 153(4) EPC

(43) Date of publication:
**27.05.2026 Bulletin 2026/22**

(21) Application number: **24845544.6**

(22) Date of filing: **19.07.2024**

(51) International Patent Classification (IPC):
***A23C 11/10*** (2025.01)　　***A23L 5/00*** (2016.01)
***A23L 31/15*** (2016.01)

(52) Cooperative Patent Classification (CPC):
**A23C 11/10; A23L 5/00; A23L 31/15**

(86) International application number:
**PCT/JP2024/025901**

(87) International publication number:
**WO 2025/023167 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.07.2023 JP 2023119307**

(71) Applicant: **Asahi Group Holdings, Ltd.
Tokyo 130-8602 (JP)**

(72) Inventors:
• **OTSUSHI Noboru
Moriya-shi, Ibaraki 302-0106 (JP)**
• **KATO Yuki
Moriya-shi, Ibaraki 302-0106 (JP)**
• **ASANO Emiko
Moriya-shi, Ibaraki 302-0106 (JP)**

(74) Representative: **J A Kemp LLP
80 Turnmill Street
London EC1M 5QU (GB)**

(54) **MILK SUBSTITUTE COMPOSITION CONTAINING YEAST EXTRACT FUNGAL RESIDUE AND METHOD FOR IMPROVING ODOR OF YEAST MATERIAL**

(57) To provide a milk-substitute composition for reducing characteristic flavors (yeasty smell, oil-and-fat deterioration smell, and grassy odor) derived from a yeast material and supplementing proteins.

Provided are a milk-substitute composition comprising a yeast cell body residue or a decomposition product thereof with a cell-wall lytic enzyme, wherein the total content of linear saturated aliphatic aldehydes having 7 to 9 carbon atoms in the residue is a predetermined amount or less, and a method for improving flavors of various yeast materials such as a yeast cell body residue or a decomposition product thereof with a cell-wall lytic enzyme. The composition of the present invention, since the characteristic flavors distinctive to yeast are remarkably reduced, can be mixed with various foods and drinks as a milk-substitute composition in a higher concentration than conventional products.

EP 4 748 236 A1

**Description**

TECHNICAL FIELD

The present invention relates to a milk-substitute composition containing a yeast cell body residue or a decomposition product thereof with a cell-wall lytic enzyme, characterized in that the total content of linear saturated aliphatic aldehydes having 7 to 9 carbon atoms in the residue is a predetermined amount or less, and relates to a method for improving flavors of various yeast materials such as a yeast cell body residue or a decomposition product thereof with a cell-wall lytic enzyme.

BACKGROUND ART

In recent years, foods using milk-like substitutes derived from plants such as oats, soybeans and almonds, in place of a milk raw material have been attracting more attention for the reasons of avoiding milk-derived allergens, an increased demand for low-fat or non-fat foods due to diet consciousness and health consciousness, or an increased demand for vegan foods. However, these plant-derived milk-like substitutes are usually more expensive than cow's milk and are known as foods containing allergic substances.

Other than the plant-derived milk-like substitutes, a yeast material-derived milk-like substitute has been reported. For example, the present applicant has reported the use of a composition containing a yeast cell wall decomposition product, which contains a decomposition product of a residue (yeast cell body residue) obtained after a yeast extract is produced with a cell-wall lytic enzyme, as a milk-like substitute (for example, see Patent Document 1).

PRIOR ART DOCUMENT

PATENT DOCUMENT

Patent Document 1: JP 2022-135934 A

SUMMARY OF THE INVENTION

PROBLEMS TO BE SOLVED BY THE INVENTION

However, the yeast material-derived milk-like substitutes have characteristic flavors (e.g., yeasty smell, oil-and-fat deterioration smell, and grassy odor). Because of this, when a yeast material-derived milk-like substitute was used in a concentration of about 5% for supplying proteins, it had a problem of being not suitable for direct drinking due to its strong flavor.

MEANS TO SOLVE THE PROBLEMS

The present inventors conducted intensive studies to solve the problem. As a result, they found that characteristic flavors are reduced by setting the total amount of linear saturated aliphatic aldehydes having 7 to 9 carbon atoms contained in the residue of a milk-substitute composition containing a yeast cell body residue or a decomposition product thereof with a cell-wall lytic enzyme to a predetermined amount or less, with the result that the milk-substitute composition can be subjected to direct drinking. Based on the finding, the present invention was accomplished.

Accordingly, the gist of the present invention is as follows.

[1] A milk-substitute composition comprising a yeast cell body residue, wherein a total content of heptanal, octanal, and nonanal, which are linear saturated aliphatic aldehydes having 7 to 9 carbon atoms contained in the residue, is 3.8 ppm or less based on a dry mass of the residue.

[2] The composition according to [1], wherein the residue contains 1.50 ppm or less of heptanal, and/or 0.37 ppm or less of octanal, and/or 2.02 ppm or less of nonanal based on the dry mass of the residue.

[3] A milk-substitute composition comprising a decomposition product of a yeast cell body residue with a cell-wall lytic enzyme, wherein a total content of heptanal, octanal, and nonanal, which are linear saturated aliphatic aldehydes having 7 to 9 carbon atoms contained in the residue, is 3.8 ppm or less based on a dry mass of the residue.

[4] The composition according to [3], which is a milk-substitute composition comprising a decomposition product of a yeast cell body residue with a cell-wall lytic enzyme, wherein the residue contains 1.50 ppm or less of heptanal, and/or 0.37 ppm or less of octanal, and/or 2.02 ppm or less of nonanal based on the dry mass of the residue.

[5] The composition according to [3] or [4], wherein the milk-substitute composition comprising a decomposition product of a yeast cell body residue with a cell-wall lytic enzyme is obtained by a method comprising the following:

(a) treating the yeast cell body residue with a cell-wall lytic enzyme at 40 to 60°C for 1 to 24 hours, and
(b) collecting the treated product obtained in (a).

[6] The composition according to any one of [3] to [5], wherein the cell-wall lytic enzyme is a glucanase.
[7] The composition according to any one of [3] to [6], wherein the cell-wall lytic enzyme is a glucanase having β-1,3, β-1,4, and/or β-1,6 activity.
[8] The composition according to any one of [3] to [7], wherein the cell-wall lytic enzyme is a glucanase derived from Streptomyces.
[9] The composition according to any one of [3] to [8], wherein the cell-wall lytic enzyme is a glucanase having no protease activity.
[10] A milk-substitute food and drink comprising the composition according to any one of [1] to [9].
[11] The milk-substitute food and drink according to [10], further comprising 0.1 to 30% by mass of an oil and fat.
[12] A method for improving flavor of a yeast material, comprising reducing a total content of heptanal, octanal, and nonanal, which are linear saturated aliphatic aldehydes having 7 to 9 carbon atoms contained in the yeast material.
[13] The method for improving flavor according to [12], comprising reducing the total content of heptanal, octanal, and nonanal, which are linear saturated aliphatic aldehydes having 7 to 9 carbon atoms contained in the yeast material, by 50% or more.
[14] The method for improving flavor according to [12] or [13], comprising reducing the total content of heptanal, octanal, and nonanal, which are linear saturated aliphatic aldehydes having 7 to 9 carbon atoms contained in the yeast material, to 3.8 ppm or less based on a dry mass of the material.
[15] The method for improving flavor according to any one of [12] to [14], comprising reducing heptanal to 1.50 ppm or less, octanal to 0.37 ppm or less, and/or nonanal to 2.02 ppm or less, contained in the yeast material, based on the dry mass of the yeast material.
[16] The method for improving flavor according to any one of [12] to [15], wherein the yeast material is a yeast cell body residue or a decomposition product of a yeast cell body residue with a cell-wall lytic enzyme.
[17] A yeast material improved in flavor by the method for improving flavor according to any one of [12] to [16].
[18] A method for improving flavor of a milk-substitute composition, in case a milk-substitute composition comprising a yeast cell body residue, comprising reducing a total content of heptanal, octanal, and nonanal, which are linear saturated aliphatic aldehydes having 7 to 9 carbon atoms contained in the residue.
[19] The method for improving flavor according to [18], comprising reducing the total content of heptanal, octanal, and nonanal, which are linear saturated aliphatic aldehydes having 7 to 9 carbon atoms contained in the residue, by 50% or more.
[20] The method for improving flavor according to [18] or [19], comprising reducing the total content of heptanal, octanal, and nonanal, which are linear saturated aliphatic aldehydes having 7 to 9 carbon atoms contained in the residue, to 3.8 ppm or less based on the dry mass of the residue.
[21] The method for improving flavor according to any one of [18] to [20], comprising reducing a content of heptanal to 1.50 ppm or less, a content of octanal to 0.37 ppm or less, and/or a content of nonanal to 2.02 ppm or less, contained in the residue, based on the dry mass of the residue.
[22] A method for improving flavor of a milk-substitute composition, in case a milk-substitute composition comprising a decomposition product of a yeast cell body residue with a cell-wall lytic enzyme, comprising reducing a total content of heptanal, octanal, and nonanal, which are linear saturated aliphatic aldehydes having 7 to 9 carbon atoms contained in the residue, followed by treating the residue with a cell-wall lytic enzyme.
[23] The method for improving flavor of a milk-substitute composition according to [22], comprising reducing the total content of heptanal, octanal, and nonanal, which are linear saturated aliphatic aldehydes having 7 to 9 carbon atoms contained in the residue, by 50% or more, followed by treating the residue with a cell-wall lytic enzyme.
[24] The method for improving flavor of a milk-substitute composition according to [22] or [23], comprising reducing the total content of heptanal, octanal, and nonanal, which are linear saturated aliphatic aldehydes having 7 to 9 carbon atoms contained in the residue, to 3.8 ppm or less based on the dry mass of the residue, followed by treating the residue with a cell-wall lytic enzyme.
[25] The method for improving flavor of a milk-substitute composition according to any one of [22] to [24], comprising reducing a content of heptanal to 1.50 ppm or less, a content of octanal to 0.37 ppm or less, and/or a content of nonanal to 2.02 ppm or less, contained in the residue, based on the dry mass of the residue, followed by treating the residue with a cell-wall lytic enzyme.

EFFECTS OF THE INVENTION

According to the present invention, it is possible to provide a milk-substitute composition using an inexpensive and easily available yeast cell body residue as a raw material. The composition of the present invention, since characteristic flavors distinctive to yeast (in particular, yeasty smell, oil-and-fat deterioration smell, and grassy odor) are remarkably reduced by controlling the total amount of the linear saturated aliphatic aldehydes having 7 to 9 carbon atoms contained in a yeast cell body residue to a predetermined amount or less, can be mixed with various foods and drinks in a higher concentration than conventional products, as a milk-substitute composition. Thus, the composition of the present invention makes it possible to more easily take yeast-derived proteins, dietary fibers, and other nutrients.

BRIEF DESCRIPTION OF THE DRAWINGS

Fig. 1 is a radar chart showing the results (average values) of the sensory evaluation of Formulations 1 and 2 in Test Example 1 by five expert panelists.
Fig. 2 is a radar chart showing the results (average values) of the sensory evaluation of Formulations 3 and 4 in Test Example 2 by five expert panelists.
Fig. 3 is a radar chart showing the results (average values) of the sensory evaluation of Formulations 5 and 6 in Test Example 2 by five expert panelists.
Fig. 4 is a radar chart showing the results (average values) of the sensory evaluation of Formulations 7 and 8 in Test Example 2 by five expert panelists.
Fig. 5 is a radar chart showing the results (average values) of the sensory evaluation of Formulations 9 and 10 in Test Example 2 by five expert panelists.
Fig. 6 is a radar chart showing the results (average values) of the sensory evaluation of Formulations 11 and 12 in Test Example 2 by five expert panelists.
Fig. 7 is a radar chart showing the results (average values) of the sensory evaluation of the yeast cell body residue (compositions of Comparative Examples 1, 3 and 4, and Examples 1 and 3) in Test Example 5 by five expert panelists.
Fig. 8 is a radar chart showing the results (average values) of the sensory evaluation of the decomposition product of a yeast cell body residue with a cell-wall lytic enzyme (compositions of Comparative Examples 2, 5 and 6 and Examples 2 and 4) in Test Example 5 by five expert panelists.

EMBODIMENTS FOR CARRYING OUT THE INVENTION

In an embodiment of the present invention, there is provided a milk-substitute composition comprising a yeast cell body residue, preferably a composition in which the total amount of heptanal, octanal, and nonanal, which are linear saturated aliphatic aldehydes having 7 to 9 carbon atoms contained in the residue, is 3.8 ppm or less based on the dry mass of the residue.
In the present invention, the term "milk-substitute composition" refers to a composition that can be used in place of milk (typically, cow's milk) consumed by humans. Milk consumed by humans is a cloudy liquid secreted by the mammary glands of mammals, containing water, nutrients such as proteins, lipids, carbohydrates, vitamins, and minerals, and having a distinctive milk flavor. The milk-substitute composition refers to a liquid having one or a plurality of these characteristics and consumed by humans. The milk-substitute compositions are generally produced from plant materials such as soybeans, almonds, oats, rice, and coconuts, and containing plant-derived proteins and lipids. Some of the milk-substitute compositions may contain dietary fibers rarely contained in milk. The milk-substitute compositions produced from plant materials are used alone or may be used as a mixture or as a mixture with animal-derived milk. The milk-substitute composition of the present invention can be used in place of milk-substitute compositions produced from such plant materials commonly known.
The term "yeast cell body residue" used herein refers to a residue containing the cell wall of yeast, and is not particularly limited as long as it is a residue (insoluble fraction) of yeast cell bodies obtained after extraction treatment of yeast. Specifically, the term refers to yeast cell bodies remaining as a residue after yeast is subjected to a known extraction treatment such as self-digestion treatment (protease treatment), hot water treatment, acid treatment, alkali treatment, and/or mechanical pulverization treatment and the separated supernatant (water-soluble fraction (yeast extract)) is removed by e.g., centrifugation. The yeast cell body residue is preferably a residue (water-insoluble fraction) of the yeast cell bodies obtained after the extraction of yeast with hot water. In the yeast cell body residue (water-insoluble fraction) according to the present invention, the soluble solid content thereof is preferably less than 5% by mass based on the dry mass of the residue. The solubleness of the soluble solid content means being soluble in water, and the soluble solid content is calculated as the ratio (% by mass) based on the dry mass of the yeast cell body residue. The soluble solid content of the yeast cell body residue according to the present invention can be measured in accordance with, for example, the method described in Test Example 4 (described later).

The term "dry mass of the yeast cell body residue" used herein refers to the mass of the yeast cell body residue after drying it by a known method. The drying method is not particularly limited and any known drying method can be used, such as heat drying under atmospheric pressure, vacuum drying, spray drying and lyophilization. The dry mass can be obtained by drying a sample, for example, by a heat-dryer under atmospheric pressure at 105°C for 5 hours and measuring the residue.

The yeast cell body residue is constituted of e.g., proteins, lipids, ash, and dietary fibers. The content rate of the proteins is, for example, from 20% by mass to 60% by mass based on the dry mass of the yeast cell body residue. The content rate of the lipids is, for example, from 1% by mass to 10% by mass based on the dry mass of the yeast cell body residue. The content rate of the ash is, for example, from 0% by mass to 10% by mass based on the dry mass of the yeast cell body residue. The content rate of the dietary fibers is, for example, from 10% by mass to 60% by mass based on the dry mass of the yeast cell body residue. Other than the general nutritional components, the yeast cell body residue contains components reported to have physiological functions, such as β-glucan and α-mannan. β-Glucan is a polysaccharide obtained by polymerization of D-glucose via β-1,3 bond and β-1,6 bond, and is classified as a dietary fiber since it is a component of foods that cannot be digested by human digestive enzymes. α-Mannan is a polysaccharide obtained by polymerization of D-mannose via α-1,6 bond, α-1,2 bond or α-1,3 bond, and is classified as a dietary fiber since it is a component of foods that cannot be digested by human digestive enzymes. The content rate of the β-glucan is, for example, from 10% by mass to 40% by mass based on the dry mass of the yeast cell body residue. The content rate of the α-mannan is, for example, from 10% by mass to 40% by mass based on the dry mass of the yeast cell body residue. The contents of individual components can be determined by known analytical methods. The content of the protein can be obtained by measuring it as the amount of nitrogen, for example, by the Kjeldahl method, and multiplying the amount of nitrogen by a conversion factor of 6.25. The content of the lipids can be determined, for example, by the acid decomposition method. The content of the ash can be determined by the direct ashing method. The content of the dietary fibers can be determined, for example, by the Prosky method (enzyme-gravimetric method) or by high-performance liquid chromatography (enzyme-HPLC method). The content of α-mannan can be measured by determining, for example, mannose produced by hydrolyzing mannan. The content of β-glucan can be measured by using, for example, a (1-3), (1-4)-β-glucan assay kit (manufactured by Megazyme Ltd.).

In the residue (water-insoluble fraction) of yeast cell bodies thus obtained, when the total amount of heptanal, octanal, and nonanal, which are linear saturated aliphatic aldehydes having 7 to 9 carbon atoms, is a predetermined amount or more as described later, if an appropriate purification/washing operation is performed as necessary, it is possible to obtain the yeast cell body residue according to the present invention having the predetermined amount (described later) or less of the linear saturated aliphatic aldehydes having 7 to 9 carbon atoms. Examples of the purification/washing operation include repeating extraction and separation treatment and increasing the amount of washing water.

The yeast is not particularly limited as long as it can be applied to the field of foods. Examples of the yeast include brewing yeast, bakery yeast, and sake yeast. Examples of the yeast include, but are not limited to, microbes belonging to the genus Saccharomyces, Saccharomycodes, Rhodotorula, Endomycopsis, Nematospora, Brettanomyces, Candida, and Torulopsis. Of them, Saccharomyces cerevisiae, Saccharomyces pastorianus, and Saccharomyces bayanus are preferable. These may be alone or two or more types of them may be used in combination.

The yeast cell body residue according to the present invention is characterized in that the total content of heptanal, octanal, and nonanal, which are linear saturated aliphatic aldehydes having 7 to 9 carbon atoms contained in the residue, is reduced to a predetermined amount or less.

The linear saturated aliphatic aldehydes are known to have citrus flavors, grassy flavors, and a flavor of an oxidized oil and fat. Alcohols such as octanol and nonanol and 2-pentylfuran are known to have floral and sweet fruity scents and are reported to be contained in oxidized oil products.

When saturated linear aliphatic aldehydes are present at high concentrations, it is known that they emit unpleasant odors. Long linear aliphatic aldehyde has lower volatility than the short saturated linear aliphatic aldehyde. The smell of the linear aliphatic aldehyde gives different impression depending on the number of carbon atoms.

It is said that butanal having 4 carbon atoms and pentanal having 5 carbon atoms have an irritating odor like a sweet, sour and burnt odor, whereas hexanal having 6 carbon atoms is said to contribute to a green-beany smell. Heptanal having 7 carbon atoms, octanal having 8 carbon atoms, and nonanal having 9 carbon atoms have not only a grassy odor but also an oily odor and an odor generated from an oxidized oil and fat. Decanal having 10 carbon atoms has a flavor such as citrus in addition to an oily odor.

Specifically, the total amount of heptanal, octanal, and nonanal, which are linear saturated aliphatic aldehydes having 7 to 9 carbon atoms contained in the yeast cell body residue according to the present invention, is 3.8 ppm or less based on the dry mass of the residue. In view of the effect of reducing "yeasty smell", "oil-and-fat deterioration smell", and "grassy odor", the total amount is preferably 3.5 ppm or less, more preferably 3.0 ppm or less, and still more preferably 2.0 ppm or less. The lower limits of the total amount of heptanal, octanal, and nonanal, which are linear saturated aliphatic aldehydes having 7 to 9 carbon atoms contained in the yeast cell body residue according to the present invention, are not particularly limited, and may not be detected. However, when detected, the lower limits are each generally 0.03 ppm or more based on the dry mass of the residue. It is known that a linear saturated aliphatic aldehydes having 7 to 9 carbon atoms contribute to "oil-and-fat deterioration smell" and "grassy odor". However, the present inventors have found that characteristic flavor of yeast is remarkably reduced by controlling the content of the aldehydes in the yeast cell body residue to 3.8 ppm or less.

Specifically, the content of heptanal, which is a linear saturated aliphatic aldehyde having 7 carbon atoms contained in the yeast cell body residue according to the present invention, is 1.50 ppm or less based on the dry mass of the residue. In view of the effect of reducing "yeasty smell", "oil-and-fat deterioration smell", and "grassy odor", the content is preferably 1.40 ppm or less, more preferably 1.25 ppm or less, and still more preferably 1.00 ppm or less. The content of octanal, which is a linear saturated aliphatic aldehyde having 8 carbon atoms contained in the yeast cell body residue according to the present invention is 0.37 ppm or less based on the dry mass of the residue. In view of the effect of reducing "yeasty smell", "oil-and-fat deterioration smell", and "grassy odor", the content is preferably 0.35 ppm or less, more preferably 0.30 ppm or less, and still more preferably 0.20 ppm or less. The content of nonanal, which is a linear saturated aliphatic aldehyde having 9 carbon atoms contained in the yeast cell body residue according to the present invention is 2.02 ppm or less based on the dry mass of the residue. In view of the effect of reducing "yeasty smell", "oil-and-fat deterioration smell", and "grassy odor", the content is preferably 1.80 ppm or less, more preferably 1.50 ppm or less, and still more preferably 1.00 ppm or less. The lower limits of the content of heptanal, which is a linear saturated aliphatic aldehyde having 7 carbon atoms, octanal and/or nonanal contained in the yeast cell body residue according to the present invention are not particularly limited, and may not be detected. However, when detected, the lower limits of these are each generally 0.01 ppm or more based on the dry mass of the residue.

The milk-substitute composition containing the yeast cell body residue of the present invention may be present in the form of a cloudy liquid or paste containing the yeast cell body residue in an appropriate medium (preferably water) in an appropriate concentration of, for example, about 0.001 to about 30% by mass, and preferably about 5 to about 20% by mass. Alternatively, the milk-substitute composition of the present invention may be the yeast cell body residue (water-insoluble fraction) itself, preferably in the form of a powder having a soluble solid content of less than 5% by mass. Use of the composition of the present invention makes it possible to take nutrients including proteins and dietary fibers derived from yeast.

In another embodiment of the present invention, there is provided a milk-substitute composition containing a decomposition product of a yeast cell body residue with a cell-wall lytic enzyme, in which the total amount of heptanal, octanal, and nonanal, which are linear saturated aliphatic aldehydes having 7 to 9 carbon atoms contained in the residue, is preferably 3.8 ppm or less based on the dry mass of the residue. Incidentally, the term "yeast cell body residue" and "milk-substitute composition" are the same as defined above.

Also, the term "dry mass of a decomposition product of a yeast cell body residue with a cell-wall lytic enzyme" used herein refers to the mass of a decomposition product of a yeast cell body residue with a cell-wall lytic enzyme after drying it by a known method. The drying method is not particularly limited and any known drying method can be used, such as heat drying under atmospheric pressure, vacuum drying, spray drying and lyophilization. The dry mass can be obtained by drying a sample, for example, by a heat-dryer under atmospheric pressure at 105°C for 5 hours and measuring the residue.

The decomposed product of the yeast cell body residue with a cell-wall lytic enzyme according to the present invention is characterized in that the total amount of heptanal, octanal, and nonanal, which are linear saturated aliphatic aldehydes having 7 to 9 carbon atoms contained in the residue, is reduced to a predetermined amount or less. Specifically, the total amount of heptanal, octanal, and nonanal, which are linear saturated aliphatic aldehydes having 7 to 9 carbon atoms contained in the yeast cell body residue according to the present invention, is 3.8 ppm or less based on the dry mass of the residue. In view of the effect of reducing "yeasty smell", "oil-and-fat deterioration smell", and "grassy odor", the total amount is preferably 3.5 ppm or less, more preferably 3.0 ppm or less, and still more preferably 2.0 ppm or less. The lower limits of the total amount of heptanal, octanal, and nonanal, which are linear saturated aliphatic aldehydes having 7 to 9 carbon atoms contained in the yeast cell body residue according to the present invention, are not particularly limited, and may not be detected. However, when detected, the lower limits are each generally 0.03 ppm or more based on the dry mass of the residue.

Specifically, for the decomposition product of a yeast cell body residue with a cell-wall lytic enzyme according to the present invention, the content of heptanal, which is a linear saturated aliphatic aldehyde having 7 carbon atoms contained in the residue is 1.50 ppm or less based on the dry mass of the residue. In view of the effect of reducing "yeasty smell", "oil-and-fat deterioration smell", and "grassy odor", the content is preferably 1.40 ppm or less, more preferably 1.25 ppm or less, and still more preferably 1.00 ppm or less. The content of octanal, which is a linear saturated aliphatic aldehyde having 8 carbon atoms contained in the yeast cell body residue according to the present invention is 0.37 ppm or less based on the dry mass of the residue. In view of the effect of reducing "yeasty smell", "oil-and-fat deterioration smell", and "grassy odor", the content is preferably 0.35 ppm or less, more preferably 0.30 ppm or less, and still more preferably 0.20 ppm or less. The content of nonanal, which is a linear saturated aliphatic aldehyde having 9 carbon atoms contained in the yeast cell body residue according to the present invention is 2.02 ppm or less based on the dry mass of the residue. In view of the effect of reducing "yeasty smell", "oil-and-fat deterioration smell", and "grassy odor", the content is preferably 1.80 ppm or less, more preferably 1.50 ppm or less, and still more preferably 1.00 ppm or less. The lower limits of the content of heptanal, which is a linear saturated aliphatic aldehyde having 7 carbon atoms, octanal and/or nonanal contained in the yeast cell body residue according to the present invention are not particularly limited, and may not be detected. However, when detected, the lower limits of these are each generally 0.01 ppm or more based on the dry mass of the residue.

The term "cell-wall lytic enzyme" used herein refers to an enzyme capable of decomposing part or all of the cell wall of yeast or a combination of such enzymes. The cell-wall lytic enzyme preferably has endo activity, and more preferably, endo activity, alone. The cell-wall lytic enzyme preferably has low protease activity or virtually or completely no protease activity (that is, having no protease activity). When a cell-wall lytic enzyme having protease activity is used or when an enzyme having protease activity is co-present, the enzyme is preferably used under conditions (for example, pH, temperature) where protease activity can be suppressed.

The cell-wall lytic enzyme may be derived from a natural product, commercially available, or obtained by a method using, e.g., genetic recombination technology.

Examples of the cell-wall lytic enzyme include, but are not limited to, a glucanase and a mannanase. The glucanase (preferably having endo activity (preferably endo activity alone), and/or having no protease activity) is, for example, a glucanase having $\beta$-1,3, $\beta$-1,4, and/or $\beta$-1,6 activity, preferably a glucanase derived from the genus Streptomyces or the genus Talaromyces, more preferably a glucanase derived from the genus Streptomyces, further preferably a glucanase derived from Streptomyces and having $\beta$-1,3, $\beta$-1,4, and/or $\beta$-1,6 activity, more further preferably a glucanase derived from Streptomyces, having $\beta$-1,3, $\beta$-1,4, and/or $\beta$-1,6 activity, and endo activity (preferably having endo activity alone), still further preferably a glucanase derived from Streptomyces, having $\beta$-1,3, $\beta$-1,4, and/or $\beta$-1,6 activity, endo activity, and no protease activity (for example, DENAZYME GEL-L1/R, manufactured by Nagase Viita Co., Ltd.), and still further preferably a glucanase derived from Streptomyces, having $\beta$-1,3, $\beta$-1,4, and/or $\beta$-1,6 activity, endo activity alone, and no protease activity.

In an embodiment of the present invention, the cell-wall lytic enzyme is a glucanase.

In an embodiment of the present invention, the cell-wall lytic enzyme is a glucanase having $\beta$-1,3, $\beta$-1,4, and/or $\beta$-1,6 activity.

In an embodiment of the present invention, the cell-wall lytic enzyme is a glucanase derived from Streptomyces.

In a preferred embodiment of the present invention, the cell-wall lytic enzyme is a glucanase derived from Streptomyces and having $\beta$-1,3, $\beta$-1,4, and/or $\beta$-1,6 activity.

In an embodiment of the present invention, the cell-wall lytic enzyme is a glucanase having endo activity (preferably having endo activity alone).

In a preferred embodiment of the present invention, the cell-wall lytic enzyme is a glucanase derived from Streptomyces having $\beta$-1,3, $\beta$-1,4, and/or $\beta$-1,6 activity, and endo activity (preferably endo activity alone).

In an embodiment of the present invention, the cell-wall lytic enzyme is a glucanase having no protease activity.

In a preferred embodiment of the present invention, the cell-wall lytic enzyme is a glucanase derived from Streptomyces, having $\beta$-1,3, $\beta$-1,4, and/or $\beta$-1,6 activity, endo activity (preferably endo activity alone), and no protease activity.

The term "decomposition product with a cell-wall lytic enzyme" used herein refers to a product obtained by decomposing the yeast cell body residue with a cell-wall lytic enzyme, specifically, a product obtained by decomposing the cell wall of the yeast contained in the yeast cell body residue with a cell-wall lytic enzyme.

The decomposition product of a yeast cell body residue with a cell-wall lytic enzyme is constituted of, e.g., proteins, lipids, ash, and dietary fibers. The content rate of proteins is, for example, from 20% by mass to 60% by mass based on the dry mass of a decomposition product of a yeast cell body residue with a cell-wall lytic enzyme. The content rate of the lipids is, for example, from 1% by mass to 10% by mass based on the dry mass of a decomposition product of a yeast cell body residue with a cell-wall lytic enzyme. The content rate of the ash is, for example, from 0% by mass to 10% by mass based on the dry mass of a decomposition product of a yeast cell body residue with a cell-wall lytic enzyme. The content rate of the dietary fibers is, for example, from 10% by mass to 60% by mass based on the dry mass of a decomposition product of a yeast cell body residue with a cell-wall lytic enzyme. Other than general nutritional components, components which are reported to have physiological functions, such as $\beta$-glucan and $\alpha$-mannan, are contained in a decomposition product of a yeast cell body residue with a cell-wall lytic enzyme. $\beta$-Glucan is a polysaccharide obtained by polymerization of D-glucose via $\beta$-1,3 bond and $\beta$-1,6 bond, and is classified as a dietary fiber since it is a component of foods that cannot be digested by human digestive enzymes. $\alpha$-Mannan is a polysaccharide obtained by polymerization of D-mannose via $\alpha$-1,6 bond, $\alpha$-1,2 bond or $\alpha$-1,3 bond, and is classified as a dietary fiber since it is a component of foods that cannot be digested by human digestive enzymes. The content rate of the $\beta$-glucan

varies depending on the exo activity of the glucanase contained in the cell-wall lytic enzyme and is, for example, from 0% by mass to 40% by mass based on the dry mass of a decomposition product of a yeast cell body residue with a cell-wall lytic enzyme. The content rate of the α-mannan is, for example, from 10% by mass to 40% by mass based on the dry mass of a decomposition product of a yeast cell body residue with a cell-wall lytic enzyme. The contents of individual components can be measured by known analytical method as mentioned above.

Examples of the method for obtaining a "decomposition product with a cell-wall lytic enzyme", include, but are not limited to, methods commonly known to those skilled in the art, those described in Examples and a method including the following:

(a) treating the yeast cell body residue with a cell-wall lytic enzyme, and
(b) collecting the treated product obtained in (a), and analogous method thereto.

In another embodiment of the present invention, the decomposition product is obtained by the method including the following:

(a) treating the yeast cell body residue with a cell-wall lytic enzyme (preferably glucanase) at about 40 to about 60°C for about 1 to about 24 hours, and
(b) collecting the treated product obtained in (a).

The term "yeast cell body residue" in the (a) is the same as defined above, and is preferably the residue (water-insoluble fraction) of the yeast cell body after extraction of the yeast with hot water. Preferably the yeast cell body residue having less than 5% by mass of soluble solid content based on its dry mass is used.

The term "cell-wall lytic enzyme" in the (a) is the same as defined above, and is preferably a glucanase.

The term "treatment" in the (a) is not particularly limited as long as it is performed in the conditions under which a cell-wall lytic enzyme can decompose the cell wall of the yeast contained in the yeast cell body residue, and can be appropriately changed depending on, e.g., the origin of the cell wall of the yeast, the type and/or amount of cell-wall lytic enzyme, and desired characteristics. The treatment is usually performed in a desired solvent (for example, water). For example, the treatment is performed in a suspension having yeast cell body residue suspended in a solvent (for example, water). The suspension may be subjected to sterilization treatment (for example, heat sterilization, filter sterilization), if necessary. The treatment of a yeast cell body residue with a cell-wall lytic enzyme can be performed, for example, at a temperature of more than 0°C to less than about 100°C (preferably about 10 to about 70°C, more preferably about 25 to about 65°C, and further preferably about 40 to about 60°C) for about 0.5 to about 120 hours (preferably about 0.5 to about 60 hours, more preferably about 1 to about 24 hours, further preferably about 3 hours to about 24 hours, and more further preferably about 12 to about 24 hours) at pH of about 1 to about 12 (preferably about 2 to about 10, more preferably about 3 to about 8, and further preferably about 4 to about 6).

After the above-mentioned treatment, the cell-wall lytic enzyme may be inactivated by treatment at a high temperature, if necessary, with an acid or an alkali.

In the (b), the treated product obtained in (a) may be used directly in its entirety including the residue (insoluble fraction) as the "decomposition product of a yeast cell body residue with a cell-wall lytic enzyme". Alternatively, if necessary, the product, which is obtained by further performing, e.g., purification (for example, HPLC, ultrafiltration), condensation (for example, air-dry, filtration under reduced pressure), sterilization (for example, heat sterilization, filter sterilization), and drying (for example, air-dry, heating, drying under reduced pressure, spray drying, freeze drying), may be used as a "decomposition product of a yeast cell body residue with a cell-wall lytic enzyme". Incidentally, the conditions for these processes can be controlled by those skilled in the art.

In the (b), the treated product obtained in (a) may be used directly in its entirety including the residue (insoluble fraction), as the milk-substitute composition of the present invention. Alternatively, the milk-substitute composition containing a decomposition product of a yeast cell body residue with a cell-wall lytic enzyme of the present invention may be present in the form of a cloudy liquid or paste containing the decomposition product in an appropriate medium (preferably water) in an appropriate concentration of, for example, about 0.001 to about 30% by mass, and preferably about 5 to about 20% by mass on a dry mass basis. Alternatively, the milk-substitute composition of the present invention may be the decomposition product itself. The use of the composition of the present invention makes it possible to intake of nutrients such as proteins and dietary fibers derived from yeast.

The yeast cell body residue or a decomposition product thereof with a cell-wall lytic enzyme mentioned above can be used in foods and drinks containing milk (cow's milk) in place of milk. For example, the "milk-substitute composition" of the present invention may be mixed in, e.g., foods and drinks, or may be mixed with foods and drinks before, during and/or after cooking.

In an embodiment of the present invention, there is provided a milk-substitute food and drink containing the yeast cell body residue or a decomposition product thereof with a cell-wall lytic enzyme of the present invention, and an oil and fat and/or a carbohydrate. The mixing ratio of the yeast cell body residue or a decomposition product thereof with a cell-wall lytic enzyme in the milk-substitute food and drink of the present invention is not particularly limited since the amount varies depending on the form of the food and drink. The dry mass of the yeast cell body residue or a decomposition product thereof with a cell-wall lytic enzyme based on the mass of the milk-substitute food and drink can be approximately 1 to 30% by mass. The milk-substitute food and drink of the present invention may be served for a drink as yeast based milk, or used in cooking as a milk substitute. The milk-substitute food and drink of the present invention becomes a novel milk-substitute food and drink prepared from yeast, as a main raw material, containing proteins as a main component, appropriately containing oils and fats, and having a milk-like appearance. If a raw material derived from animal is not used, it can be a food and drink for vegetarians and vegans who avoid intake of animal foods. When an oil and fat produced from a microorganism as a raw material is used, a novel milk-substitute food and drink without using animals and plants can be obtained.

The mixing ratio of a yeast cell body residue or a decomposition product thereof with a cell-wall lytic enzyme in a drink as yeast-based milk is not particularly limited, but the dry mass of the yeast cell body residue or a decomposition product thereof with a cell-wall lytic enzyme based on the mass of the yeast-based milk is approximately 1 to 30% by mass, preferably 2 to 20% by mass, and further preferably 5 to 10% by mass. When the amount of the yeast cell body residue or a decomposition product thereof with a cell-wall lytic enzyme to be mixed in yeast-based milk is increased, proteins derived from yeast, dietary fibers and other nutrients can be efficiently taken. On the other hand, if the mixing ratio increases, the viscosity of yeast-based milk increases, but as long as the mixing ratio of the yeast cell body residue or a decomposition product thereof with a cell-wall lytic enzyme falls within the above-mentioned range, it is possible to supply a drink efficiently providing, yeast-derived protein, dietary fibers and other nutrients while maintaining the preferred palatability as yeast-based milk.

When yeast-based milk is used in cooking as a milk substitute, it can be used in foods such as gratin and confectionery.

Examples of the "oils and fats" used herein include, but are not particularly limited to, vegetable oils and fats, animal oils and fats, processed oils and fats, such as edible safflower oil, edible grape oil, edible soybean oil, edible sunflower oil, edible corn oil, edible cottonseed oil, sesame oil, edible rapeseed oil, edible rice bran oil, edible peanut oil, edible olive oil, edible palm oil, edible palm olein, edible palm stearin, edible palm kernel oil, edible coconut oil, edible blended oil, flavored edible oil, beef tallow, lard, chicken oil, fish oil, milk fat, hydrogenated oils and fats, oils and fats produced by microorganisms such as yeast.

The amount of the oil and fat contained in the milk-substitute food and drink of the present invention is not particularly limited, since it varies depending on the form of food and drink but the amount is approximately 0.1 to 30% by mass based on the mass of the milk-substitute food and drink.

The amount of the oil and fat when applied for drink as yeast-based milk can be approximately 0.1 to 30% by mass, preferably 1 to 10% by mass, and more preferably 2 to 5% by mass based on the mass of the yeast-based milk. In yeast-based milk, if the mixing ratio of an oil and fat is increased, the taste becomes rich; a sense of satisfaction increases; and smooth drinking can be obtained. On the other hand, if the mixing ratio increases too much, there are unfavorable effects such as reduced drinkability of the yeast-based milk and intake of too much energy. However, if the mixing ratio of an oil and fat falls within the above-mentioned range, rich taste, a sense of satisfaction and smooth drinking can be provided to the yeast-based milk, and at the same time the yeast-based milk can be easy-to-drink and provide an appropriate amount of energy.

When yeast-based milk is supplied as a drink, an appropriate medium (preferably water) can be mixed in addition to the yeast cell body residue or a decomposition product thereof with a cell-wall lytic enzyme, and an oil and fat. The mixing ratio of the medium (preferably water) in the yeast-based milk can be approximately 30 to 97% by mass, preferably 40 to 95% by mass, and more preferably 45 to 93% by mass based on the mass of the yeast-based milk. If the mixing ratio of the medium (preferably water) in the yeast-based milk falls within the above-mentioned range, the yeast cell body residue or a decomposition product thereof with a cell-wall lytic enzyme and the oil and fat can be homogeneously dispersed in the medium to provide an easy-to-take drink.

The "carbohydrate" used herein refers to, for example, a monosaccharide, disaccharide, trisaccharide, tetrasaccharide, oligosaccharide, polysaccharide, a starch decomposition product, and a reduced starch decomposition product. These may be used alone or two or more types of these may be used in combination. Examples of the carbohydrate include, but are not limited to, ketotriose, aldotriose, erythrulose, ribulose, xylulose, lyxose, deoxyribose, psicose, fructose, sorbose, tagatose, allose, altrose, glucose, mannose, gulose, idose, galactose, talose, fucose, fuculose, rhamnose, sedoheptulose, sucrose, lactose, maltose, trehalose, turanose, cellobiose, raffinose, maltotriose, acarbose, stachyose, fructo-oligosaccharides, galacto-oligosaccharides, mannan oligosaccharides, glycogen, starch, cellulose, dextrin, corn syrup, powdered glucose syrup and glucan. These may be used alone or two or more types of these may be used in combination.

The milk-substitute food and drink of the present invention may further contain additives. Examples of the additives include, but are not limited to, an excipient, a lubricant, a binder, a disintegrant, a pH adjuster, a solvent, a solubilizing agent, a suspending agent, a buffer, a preservative, an antioxidant, a colorant, a sweetener, a surfactant, and a flavoring agent. For these additives, known additives can be used. The amounts or others of the additives can be appropriately controlled by those skilled in the art according to the purpose.

Examples of foods and drinks to which the "milk-substitute composition" of the present invention can be applied or added include, but are not limited to, foods and drinks that contain or is intended to contain milk (for example, cow's milk, soy milk, almond milk, oat milk, and coconut milk) or milk powder, including soups, dressings, semi-solid dressings, mayonnaise, confectionery, chocolate, margarine, fat spreads, ice cream, lacto-ice cream, ice milk, fresh cream, bread, retort foods, extract seasonings, processed oils and fats, cheese, cheese food, processed cheese, pudding and other processed foods.

The amount of the "milk-substitute composition" of the present invention to be applied is not particularly limited as long as the object of the present invention can be achieved. The amount of a yeast cell body residue or a decomposition product thereof with a cell-wall lytic enzyme (dry mass) is, for example, about 0.001 to about 30% by mass, preferably about 0.01 to about 20% by mass, and more preferably about 0.1 to about 15% by mass based on the total amount of, e.g., a food and drink or a processed product thereof.

In another embodiment of the present invention, there is provided a method for improving the flavor of a yeast material, including reducing the total content of heptanal, octanal, and nonanal, which are linear saturated aliphatic aldehydes having 7 to 9 carbon atoms contained in the yeast material. The method according to a preferred embodiment includes reducing the total content of heptanal, octanal, and nonanal, which are linear saturated aliphatic aldehydes having 7 to 9 carbon atoms contained in the yeast material, by 50% or more. In a more preferred embodiment, the method includes reducing the total content of heptanal, octanal, and nonanal, which are linear saturated aliphatic aldehydes having 7 to 9 carbon atoms contained in the yeast material, to 3.8 ppm or less based on the dry mass of the base material.

Examples of the "yeast material" in the present invention include dry yeast, yeast extract, a yeast cell body residue, and a decomposition product thereof with a cell-wall lytic enzyme. Of them, a yeast cell body residue, and a decomposition product thereof with a cell-wall lytic enzyme are preferable.

The present invention can provide a yeast material improved in flavor by the method for improving flavor.

To these embodiments, it is possible to apply the same explanation as used in the above embodiments of a milk-substitute composition containing a yeast cell body residue or a decomposition product thereof with a cell-wall lytic enzyme.

In another embodiment of the present invention, there is provided a method for improving the flavor of a milk-substitute composition, in case a milk-substitute composition containing a yeast cell body residue, including reducing the total content of heptanal, octanal, and nonanal, which are linear saturated aliphatic aldehydes having 7 to 9 carbon atoms contained in the residue. According to a preferred embodiment, there is provided a method for improving the flavor of a milk-substitute composition including reducing the total content of heptanal, octanal, and nonanal, which are saturated linear saturated aliphatic aldehydes having 7 to 9 carbon atoms contained in the residue, by 50% or more. In a more preferred embodiment, the method includes reducing the total content of heptanal, octanal, and nonanal, which are linear saturated aliphatic aldehydes having 7 to 9 carbon atoms contained in the residue, to 3.8 ppm or less based on the dry mass of the residue. In a further preferred embodiment, the method includes reducing a content of heptanal to 1.50 ppm or less; a content of octanal to 0.37 ppm or less; and/or a content of nonanal to 2.02 ppm or less, contained in the residue.

To these embodiments, it is possible to apply the same explanation as used in the above embodiments of a milk-substitute composition containing a yeast cell body residue or a decomposition product thereof with a cell-wall lytic enzyme.

In another embodiment of the present invention, there is provided a method for improving the flavor of a milk-substitute composition, in case a milk-substitute composition comprising a decomposition product of a yeast cell body residue with a cell-wall lytic enzyme, including reducing the total content of heptanal, octanal, and nonanal, which are saturated linear saturated aliphatic aldehydes having 7 to 9 carbon atoms contained in the residue, followed by treating the residue with a cell-wall lytic enzyme. According to a preferred embodiment, there is provided a method for improving the flavor of a milk-substitute composition including reducing the total content of heptanal, octanal, and nonanal, which are saturated linear saturated aliphatic aldehydes having 7 to 9 carbon atoms contained in the residue, by 50% or more, followed by treating the residue with a cell-wall lytic enzyme. In a more preferred embodiment, the method includes reducing the total content of heptanal, octanal, and nonanal, which are linear saturated aliphatic aldehydes having 7 to 9 carbon atoms contained in the residue, to 3.8 ppm or less based on the dry mass of the residue, followed by treating the residue with a cell-wall lytic enzyme. In a further preferred embodiment, the method includes reducing the content of heptanal to 1.50 ppm or less, and/or the content of octanal to 0.37 ppm or less, and/or the content of nonanal to 2.02 ppm or less, contained in the residue, followed by treating the residue with a cell-wall lytic enzyme.

To these embodiments, it is possible to apply the same explanation as used in the above embodiments of a milk-substitute composition containing a yeast cell body residue or a decomposition product thereof with a cell-wall lytic enzyme.

In still another embodiment of the present invention, there is provided the use of a yeast cell body residue as a milk-substitute composition, wherein the total content of heptanal, octanal, and nonanal, which are linear saturated aliphatic aldehydes having 7 to 9 carbon atoms contained in the residue, is 3.8 ppm or less based on a dry mass of the residue.

In another embodiment of the present invention, there is provided the use of a decomposition product of a yeast cell body residue with a cell-wall lytic enzyme as a milk-substitute composition, wherein the total content of heptanal, octanal, and nonanal, which are linear saturated aliphatic aldehydes having 7 to 9 carbon atoms contained in the residue, is 3.8 ppm or less based on a dry mass of the residue.

To these embodiments, it is possible to apply the same explanation as used in the above embodiments of a milk-substitute composition containing a yeast cell body residue or a decomposition product thereof with a cell-wall lytic enzyme.

Examples

Hereinafter, the present invention will be explained in more detail by referring to Examples, but these Examples should not be construed as limiting the scope of the present invention.

[Comparative Example 1]

Dried yeast (Hyper Yeast HG-DY manufactured by Asahi Group Foods, Ltd.) was extracted with hot water. A heavy phase (insoluble fraction) was separated from the yeast extract by a nozzle-type continuous centrifuge and sterilized under the condition of 125°C for 40 seconds and spray-dried to obtain a yeast cell body residue as the composition of Comparative Example 1. Dried yeast (Hyper Yeast HG-DY available from Asahi Group Foods, Ltd.) was extracted with hot water, and heavy phase (insoluble fraction) obtained by separating from yeast extract in a nozzle-type continuous centrifuge was sterilized at 125°C for 40 seconds and spray dried to obtain a yeast cell body residue as a composition of Comparative Example 1.

[Comparative Example 2]

The yeast cell body residue obtained in Comparative Example 1 was suspended in deionized water. The resulting slurry (solid content of 16%) was sterilized in an autoclave (121°C for 20 minutes) and 0.2% by mass of glucanase (DENAZYME GEL-L1/R, manufactured by Nagase Viita Co., Ltd.) based on the dry mass of the yeast cell body residue was added under the conditions of 50°C and pH 5.3. The resulting mixture was treated at 50°C for 18 hours. Thereafter, the treated product was heated to about 80°C to inactivate the glucanase, concentrated under reduced pressure by an evaporator to a concentration of 30% by mass, and spray-dried to obtain a decomposition product with cell-wall lytic enzyme, as the composition of Comparative Example 2.

These compositions of Comparative Examples 1 and 2 were prepared in accordance with Example 1 of Patent Document 1.

[Example 1]

The yeast cell body residue obtained in Comparative Example 1 was suspended in water to prepare a slurry (solid content of 16%). Three nozzle-type continuous centrifuges were arranged in series. Solid-liquid separation was carried out while adding water to obtain a heavy phase from which soluble components were removed. The obtained heavy phase was sterilized with the conditions of 125°C for 40 seconds, and spray-dried to obtain the yeast cell body residue as a composition of Example 1.

[Example 2]

The heavy phase prepared and sterilized in the same manner as in Example 1 was controlled to satisfy the conditions: pH 5.3 at 50°C, and 0.2% by mass of glucanase (DENAZYME GEL-L1/R, manufactured by Nagase Viita Co., Ltd.) based on the dry mass, was added. The resulting mixture was treated at 50°C for 18 hours. The treated product was subjected to the conditions of 125°C for 40 seconds to sterilize and simultaneously inactivate glucanase, and spray-dried to obtain a decomposition product with a cell-wall lytic enzyme as the composition of Example 2.

[Test Example 1]

The raw materials were mixed in accordance with the compositions shown in Table 1, emulsified by a homogenizer (Homogenizer LAB 1000, SMT CO., LTD.: 20 MPa, twice), and sterilized (121°C for 20 minutes) in an autoclave to obtain Formulation 1 and Formulation 2 as the milk-substitute composition. It was confirmed that both Formulation 1 and Formulation 2 maintain milk-like appearance of a cloudy emulsion for a predetermined period of time (3 days) or more at ambient temperature. Incidentally, Formulation 1 was prepared in the same manner as in Formulation 23 of Patent Document 1.

[Table 1]

| Composition | Formulation 1 | Formulation 2 |
|---|---|---|
| Edible sunflower oil | 3.8 g | 3.8 g |
| Comparative Example 2 | 8.8 g | - |
| Example 2 | - | 8.8 g |
| Water | 87.4 g | 87.4 g |
| Total | 100 g | 100 g |

[Sensory Evaluation of Formulation 1 and Formulation 2]

Formulation 1 and Formulation 2 were subjected to sensory evaluation performed as follows. Sensory evaluation of individual Formulations cooled to 4°C was carried out by five expert panelists. For evaluation items, "yeasty smell", "oil-and-fat deterioration smell", "grassy odor", "milk-like flavor" and "palatability", those of the composition of Formulation 1 were used as controls and regarded as point 0. The degree of flavor/taste of the test samples was evaluated based on the following evaluation criteria. Incidentally, it can be considered that "yeasty smell", "oil-and-fat deterioration smell" and "grassy odor" preferably have negative values (weaker than those of the control), whereas "milk-like flavor" and "palatability" preferably have positive values. The "yeasty smell" herein refers to yeast extract-like smell; the "oil-and-fat deterioration smell" refers to an oily odor or an odor generated from an oxidized oil and fat; and the "grassy odor" refers to a grassy odor or a bean-like smell. The "milk-like flavor" is comprehensively evaluated as to whether the flavor is close to that of animal milk based on the subtle sweet aroma, mildness, absence of off- flavor and odor, and plainness when the test drink was swallowed.

[Evaluation Criteria]

-3 point: Extremely weak
-2 point: Weak
-1 point: Slightly weak
0 point: Control
+1 point: Slightly strong
+2 point: Strong
+3 point: Extremely strong

[Results]

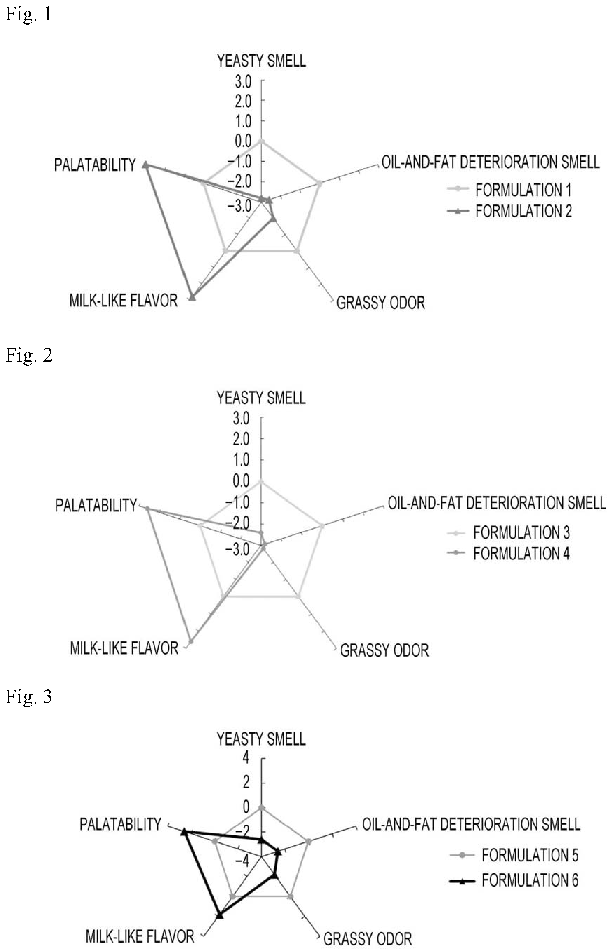

The evaluation results were expressed by average values and shown in Fig. 1. From these results, it was found that, in Formulation 2 obtained in Test Example 1, "yeasty smell", "oil-and-fat deterioration smell" and "grassy odor" are reduced, whereas "milk-like flavor" and "palatability" are increased, as compared with those of Formulation 1. It was found that Formulation 2 clearly shows desirable sensory characteristics as a milk-substitute composition as compared with Formulation 1.

[Test Example 2]

The raw materials were mixed in accordance with the compositions shown in Table 2 to obtain Formulation 3 and Formulation 4. After mixing the raw materials, they were emulsified by a homogenizer (Homogenizer LAB1000, SMT CO., LTD.: 20 MPa, twice) and sterilized (121°C for 20 minutes) in an autoclave to obtain Formulations 5 to 12 of milk-substitute compositions containing a yeast material and an oil and fat in different ratios. It was confirmed that all of Formulations 5 to 12 maintain a cloudy, emulsified and milk-like appearance for a predetermined period of time (3 days) or more at ambient temperature.

[Table 2]

[Table 2]

Table 2

| | Formulation 3 | Formulation 4 | Formulation 5 | Formulation 6 | Formulation 7 | Formulation 8 | Formulation 9 | Formulation 10 | Formulation 11 | Formulation 12 |
|---|---|---|---|---|---|---|---|---|---|---|
| Comparative Example 2 | 5 g | - | 5 g | - | 5 g | - | 20 g | - | 20g | - |
| Example 2 | - | 5g | - | 5 g | - | 5 g | - | 20 g | - | 20 g |
| Sunflower oil | - | - | 2 g | 2g | 30 g | 30 g | 2g | 2 g | 30 g | 30 g |
| Water | 95 g | 95 g | 93 g | 93 g | 65 g | 65 g | 78 g | 78 g | 50 g | 50 g |
| Total | 100 g | 100 g | 100 g | 100 g | 100 g | 100 g | 100 g | 100 g | 100 g | 100 g |

[Sensory Evaluation of Formulation 3 to Formulation 12]

Formulations 3 to 12 obtained were subjected to sensory evaluation performed as follows. Sensory evaluation of individual Formulations cooled to 4°C was carried out by five expert panelists. Formulation 3 was compared with Formulation 4, Formulation 5 with Formulation 6, Formulation 7 with Formulation 8, Formulation 9 with Formulation 10, and Formulation 11 with Formulation 12. Formulation 3, Formulation 5, Formulation 7, Formulation 9 and Formulation 11 were used as controls in respective cases. For evaluation items "yeasty smell", "oil-and-fat deterioration smell", "grassy odor", "milk-like flavor" and "palatability", those of the control were regarded as point 0. The degree of the flavor/taste of the test samples was evaluated based on the above-mentioned evaluation criteria.

[Results]

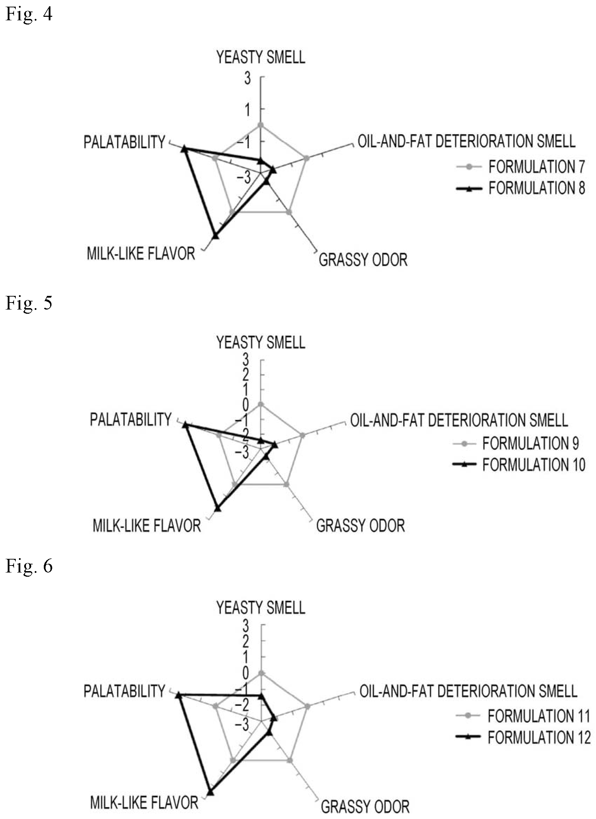

The evaluation results of 5 expert panelists were expressed by average values and shown in Fig. 2 to Fig. 6. As a result, it was found that in Formulation 4, "yeasty smell", "oil-and-fat deterioration smell" and "grassy odor" are reduced, whereas "milk-like flavor" and "palatability" are increased, as compared with those of Formulation 3. Formulation 4 showed preferable sensory characteristics as a milk-substitute composition. It was found that in Formulation 6 compared with Formulation 5, Formulation 8 compared with Formulation 7, Formulation 10 compared with Formulation 9, and Formulation 12 compared with Formulation 11, "yeasty smell", "oil-and-fat deterioration smell", and "grassy odor" are reduced, whereas "milk-like flavor" and "palatability" are increased. Preferable sensory characteristics as a milk-substitute composition were shown. The compositions of Example 2 showed more favorable flavor/taste than the compositions of Comparative Example 2 in a wide range of concentration (from 5% to 20%) and in a wide range of an oil and fat concentration (from 0% to 30%).

[Comparative Examples 3 and 4, and Example 3]

The yeast cell body residue obtained in Comparative Example 1 was suspended in water to prepare a slurry (solid content of 16%). Solid-liquid separation was carried out by treatment by a centrifuge (Avanti J-26XP, manufactured by Beckman Coulter Inc.) at $5,000 \times g$ for 5 minutes, and the supernatant was removed. After the same amount of water as the supernatant was added to make a suspension, the centrifugal operation for solid-liquid separation was carried out once again and an insoluble fraction was collected. The obtained insoluble fraction was sterilized under the conditions of 121°C for 20 minutes, and lyophilized to obtain the yeast cell body residue of Example 3. The same operation as in Example 3 was performed except that the amount of water added after the first solid-liquid separation was reduced to obtain yeast cell body residues different in the degree of washing as the compositions of Comparative Examples 3 and 4.

[Comparative Examples 5 and 6, and Example 4]

Subsequently, in Comparative Examples 3 and 4 and Example 3, the insoluble fraction sterilized was controlled to satisfy the conditions: a solid content of a slurry: 16%, 50°C and pH 5.3, and then 0.2% by mass of glucanase (DENAZYME GEL-L1/R, manufactured by Nagase Viita Co., Ltd.) based on the dry mass, was added. The resulting mixture was treated at 50°C for 18 hours. Thereafter, the treated product was subjected to the conditions of 121°C for 20 minutes to sterilize and simultaneously inactivate the glucanase, and lyophilized to obtain decomposition products with a cell-wall lytic enzyme different in degree of washing as the compositions of Comparative Examples 5 and 6 and Example 4.

[Test Example 3]

For each of the compositions obtained in Examples 1 and 3 and Comparative Examples 1, 3 and 4, the contents of flavor components were measured.

[Analysis of Flavor Components]

Aldehydes (hexanal, heptanal, octanal, nonanal, decanal), alcohols (octanol, nonanol), and others (p-xylene, and 2-pentylfuran) were selected as compounds responsible for "oil-and-fat deterioration smell" and "grassy odor". The standard products of them were subjected to GC/MS according to the SPME method. The retention times and the obtained mass spectra were compared with the spectra in the NIST library to identify various flavor components contained in the measurement samples. Using cis-3 hepten-1-ol as the internal standard substance, quantitative analysis was performed under the following GC analysis conditions in accordance with the internal standard method. The contents (ppm) thereof were calculated. In the specification, ppm represents a mass concentration by parts-per-million (mg/kg).

<SPME Conditions>

As the SPME fiber, 50/30 μm DVB/CAR/PDMS (manufactured by Supelco) was used. The fiber was heated at 60°C for 20 minutes and then flavor components were collected from the head space for 20 minutes. As the automatic sampler, MPS manufactured by GESTEL was used.

<GC/MS Measurement Method>

The measurement was performed using GC/MS (device name: GC6890N/MSD5973, manufactured by Agilent Technologies, Inc.). The analysis conditions of GC/MS were as follows.

(GC conditions)

GC/MS measurement column: DB-WAX (length: 60 m, inner diameter: 0.25 mm, liquid layer film thickness: 0.25 μm) manufactured by Agilent Technologies, Inc.
Heating condition: hold at 40°C for 5 minutes → temperature rise to 230°C at 5.0°C/min → hold for 5 minutes
Column flow rate: 1.5 mL/min

(MS conditions)

Electroionization (EI) method, 70 eV
Scan range (m/z): 20 to 350

The flavor components in samples were quantified by the method, and the contents (ppm) were calculated. The contents (ppm) per dry mass of the yeast cell body residues (Comparative Examples 1, 3 and 4 and Examples 1 and 3) are shown in Table 3.

[Table 3]

| Compound | Example 1 | Example 3 | Comparative Example 4 | Comparative Example 3 | Comparative Example 1 |
|---|---|---|---|---|---|
| Hexanal | 0.43 | 0.60 | 0.58 | 0.59 | 0.67 |
| Heptanal | 0.76 | 1.24 | 1.51 | 1.71 | 2.65 |
| Octanal | 0.10 | 0.26 | 0.38 | 0.51 | 0.82 |
| Nonanal | 0.43 | 1.30 | 2.03 | 2.72 | 3.73 |
| Decanal | N.D. | N.D. | N.D. | N.D. | N.D. |
| Octanol | 0.24 | 0.21 | 0.22 | 0.26 | 0.37 |
| Nonanol | 0.27 | 0.28 | 0.29 | 0.32 | 1.07 |
| 2-Pentylfuran | N.D. | N.D. | N.D. | 0.02 | 0.12 |
| p-Xylene | N.D. | N.D. | N.D. | N.D. | 0.05 |

[Test Example 4]

For each of the compositions of the obtained yeast cell body residues (Comparative Examples 1, 3 and 4 and Examples 1 and 3), the content ratio of soluble solid was measured.

[Measurement of Content Ratio of Soluble Solid]

The ratio (% by mass) of the solid content soluble in water contained in a yeast cell body residue based on the solid content of the residue was obtained by preparing a 10% by mass suspension of each of the compositions of Examples and Comparative Examples with deionized water and making a calculation in accordance with the following formula (1).
[Mathematical Formula 1]

**EP 4 748 236 A1**

Content ratio of soluble solids = Concentration B of solid content/concentration A of solid content $\times$ 100
     Formula (1)

In the above-mentioned formula (1), "concentration A of solid content" indicates % by mass of a dried product obtained by drying X g of a subject sample at 105°C for 5 hours, whereas "concentration B of solid content" indicates % by mass of a dried product obtained by centrifuging X g of the subject sample at 5,000 $\times$ g for 5 minutes and drying the obtained supernatant at 105°C for 5 hours. The content ratios of soluble solids calculated in accordance with formula (1) are shown in Table 4.

[Table 4]

|  | Soluble solid content ratio (% by mass) |
|---|---|
| Comparative Example 1 | 12.39 |
| Comparative Example 3 | 9.74 |
| Comparative Example 4 | 7.39 |
| Example 1 | 3.52 |
| Example 3 | 4.57 |

[Test Example 5]

[Sensory Evaluation of Yeast Cell Body Residue]

For each of the compositions obtained in Comparative Examples 1, 3 and 4 and Examples 1 and 3, sensory evaluation was carried out as follows. First, each composition was added in water of ambient temperature so as to be 5% by mass, stirred well, and then sensory evaluation was carried out by five expert panelists. For evaluation items "yeasty smell", "oil-and-fat deterioration smell", and "grassy odor", "milk-like flavor" and "palatability", those of the composition of Comparative Example 1 were used as controls and regarded as point 0. The degree of flavor/taste of each sample was evaluated based on the above-mentioned evaluation criteria.

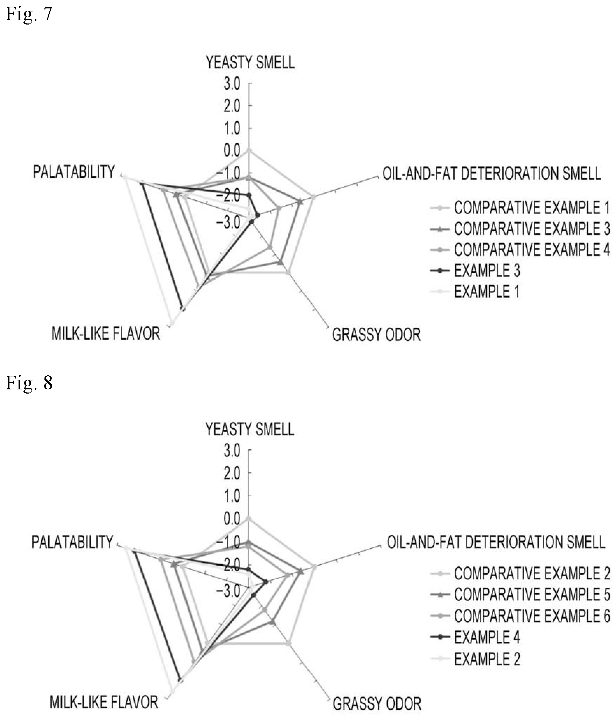

The sensory evaluation results were expressed by average values and shown in Fig. 7. Compared to the composition of Comparative Example 1, it was confirmed that in the compositions of Comparative Examples 3 and 4, "yeasty smell", "oil-and-fat deterioration smell" and "grassy odor" tend to reduce, whereas "milk-like flavor" and "palatability" tend to increase. On the other hand, in the compositions of Examples 1 and 3, "yeasty smell", "oil-and-fat deterioration smell", and "grassy odor" were reduced to a score of -2 or less, whereas "milk-like flavor" and "palatability" increased to a score of +2 or more. Particularly preferred sensory characteristics were shown.

As shown in the flavor component analysis in Table 3 above, the contents of heptanal, octanal, and nonanal in the compositions of Comparative Examples 3 and 4 and Examples 1 and 3, which reflect the degree of washing in the production method, were more reduced than that of the composition of Comparative Example 1. In the compositions of Examples 1 and 3 showing particularly preferable sensory characteristics, the content of heptanal was 1.24 ppm or less, the content of octanal was 0.26 ppm or less, and the content of nonanal was 1.30 ppm or less. The sum of the contents of heptanal, octanal and nonanal was 2.80 ppm or less. On the other hand, the content of hexanal fell in the range between 0.43 ppm and 0.67 ppm and had no significant difference among the compositions obtained in Comparative Examples 1, 3 and 4 and Examples 1 and 3. Decanal was not detected in individual compositions obtained in Comparative Examples 1, 3 and 4 and Examples 1 and 3.

Since the content of hexanal, which is a linear saturated aldehyde having 6 carbon atoms, and the content of decanal, which is a linear saturated aldehyde having 10 carbon atoms did not change in individual compositions obtained in Comparative Examples 1, 3 and 4 and Examples 1 and 3, it was considered that the effects of them on the sensory evaluation results are small. Heptanal, which is a linear saturated aldehyde having 7 carbon atoms, octanal, which is a linear saturated aldehyde having 8 carbon atoms, and nonanal, which is a linear saturated aldehyde having 9 carbon atoms have not only green-beany smell and grassy odor but also odor generated from an oxidized oil and fat. In each of the compositions obtained in Examples 1 and 3, the contents of heptanal, octanal, and nonanal were reduced as compared with those of Comparative Examples 1, 3 and 4. From the results, it was considered that "oil-and-fat deterioration smell" and the "grassy odor" are reduced. These results demonstrated that a material having preferred sensory characteristics can be obtained from the yeast cell body residue in which flavor components were reduced to predetermined levels or less.

[Sensory Evaluation of Decomposition Product with Cell-wall Lytic Enzyme]

For each of the compositions obtained in Comparative Examples 2, 5 and 6 and Examples 2 and 4, sensory evaluation was performed as follows. First, each composition was added in water of ambient temperature so as to be 5% by mass, stirred well, and then sensory evaluation was carried out by five expert panelists. For evaluation items, "yeasty smell", "oil-and-fat deterioration smell", "grassy odor", "milk-like flavor" and "palatability", those of the composition of Comparative Example 2 were used as controls and regarded as point 0. The degree of flavor/taste of each sample was evaluated based on the above-mentioned evaluation criteria.

The sensory evaluation results were expressed by average values and shown in Fig. 8. Compared to the composition of Comparative Example 2, even in the compositions of Comparative Examples 5 and 6, it was confirmed that "yeasty smell", "oil-and-fat deterioration smell", and "grassy odor" tend to reduce, whereas "milk-like flavor" and "palatability" tend to increase. On the other hand, in the compositions of Examples 2 and 4, "yeasty smell", "oil-and-fat deterioration smell", and "grassy odor" were reduced to a score of -2 or less, whereas "milk-like flavor" and "palatability" were increased to a score of +2 or more. Particularly preferred sensory characteristics were shown.

The raw materials of the compositions of Examples 2 and 4, which are decomposition products with a cell-wall lytic enzyme and showing particularly preferable sensory characteristics, are the compositions of Examples 1 and 3, which are yeast cell body residues. The flavor components of the compositions of Comparative Examples 3 and 4 and Examples 1 and 3, which are the yeast cell body residues and raw materials of the decomposition product with a cell-wall lytic enzyme, are shown in Table 3. Heptanal, octanal, and nonanal, which reflect the degree of washing in the production method, were more reduced than that of the composition of Comparative Example 1. In the compositions of Examples 1 and 3, which are raw materials of the compositions of Examples 2 and 4 showing particularly preferable sensory characteristics, the content of heptanal was 1.24 ppm or less, the content of octanal was 0.26 ppm or less, and the content of nonanal was 1.30 ppm or less. The sum of the contents of heptanal, octanal and nonanal was 2.80 ppm or less. On the other hand, the content of hexanal fell in the range between 0.43 ppm and 0.67 ppm and had no significant difference among the compositions obtained in Comparative Examples 1, 3 and 4 and Examples 1 and 3. Decanal was not detected in individual compositions obtained in Comparative Examples 1, 3 and 4 and Examples 1 and 3.

Since the content of hexanal, which is a linear saturated aldehyde having 6 carbon atoms, and the content of decanal, which is a linear saturated aldehyde having 10 carbon atoms did not change in the compositions obtained in Comparative Examples 1, 3 and 4 and Examples 1 and 3, which are the yeast cell body residues and raw materials of the decomposition product with a cell-wall lytic enzyme, it was considered that the effects of them on the sensory evaluation results on the decomposition product with a cell-wall lytic enzyme are small. Heptanal, which is a linear saturated aldehyde having 7 carbon atoms, octanal, which is a linear saturated aldehyde having 8 carbon atoms, and nonanal, which is a linear saturated aldehyde having 9 carbon atoms have not only green-beany smell and grassy odor but also odor generated from an oxidized oil and fat. In the compositions of Examples 2 and 4, which are decomposition products with a cell-wall lytic enzyme, heptanal, octanal, and nonanal of the compositions of Examples 1 and 3, which are the yeast cell body residues and the raw materials, were reduced compared with those of the compositions of Comparative Examples 1, 3 and 4. From this, it was considered that the "oil-and-fat deterioration smell" and the "grassy odor" were reduced.

These results demonstrated that a material obtained after the yeast cell body residue as a raw material, in which flavor components were reduced to a predetermined level or less, was treated with glucanase provides preferred sensory characteristics.

Industrial Applicability

The composition of the present invention, since characteristic flavors distinctive to yeast (in particular, yeasty smell, oil-and-fat deterioration smell, and grassy odor) are remarkably reduced by controlling the total amount of the linear saturated aliphatic aldehydes having 7 to 9 carbon atoms contained in a yeast cell body residue to a predetermined amount or less, can be mixed with various foods and drinks in a higher concentration than conventional product, as a milk-substitute composition. Accordingly, the composition of the present invention can be provided as foods and drinks having various forms, and makes it possible to more easily take yeast-derived proteins, dietary fibers, and other nutrients.

**Claims**

1. A milk-substitute composition comprising a yeast cell body residue, wherein a total content of heptanal, octanal, and nonanal, which are linear saturated aliphatic aldehydes having 7 to 9 carbon atoms contained in the residue, is 3.8 ppm or less based on a dry mass of the residue.

2. The composition according to claim 1, wherein the residue contains 1.50 ppm or less of heptanal, and/or 0.37 ppm or less of octanal, and/or 2.02 ppm or less of nonanal based on the dry mass of the residue.

3. A milk-substitute composition comprising a decomposition product of a yeast cell body residue with a cell-wall lytic enzyme, wherein a total content of heptanal, octanal, and nonanal, which are linear saturated aliphatic aldehydes having 7 to 9 carbon atoms contained in the residue, is 3.8 ppm or less based on a dry mass of the residue.

4. The composition according to claim 3, which is a milk-substitute composition comprising a decomposition product of a yeast cell body residue with a cell-wall lytic enzyme, wherein the residue contains 1.50 ppm or less of heptanal, and/or 0.37 ppm or less of octanal, and/or 2.02 ppm or less of nonanal based on the dry mass of the residue.

5. The composition according to claim 3, wherein the milk-substitute composition comprising a decomposition product of a yeast cell body residue with a cell-wall lytic enzyme is obtained by a method comprising the following:

   (a) treating the yeast cell body residue with a cell-wall lytic enzyme at 40 to 60°C for 1 to 24 hours, and
   (b) collecting the treated product obtained in (a).

6. The composition according to claim 3, wherein the cell-wall lytic enzyme is a glucanase.

7. The composition according to claim 3, wherein the cell-wall lytic enzyme is a glucanase having β-1,3, β-1,4 and/or β-1,6 activity.

8. The composition according to claim 3, wherein the cell-wall lytic enzyme is a glucanase derived from Streptomyces.

9. The composition according to claim 3, wherein the cell-wall lytic enzyme is a glucanase having no protease activity.

10. A milk-substitute food and drink comprising the composition according to any one of claims 1 to 9.

11. The milk-substitute food and drink according to claim 10, further comprising 0.1 to 30% by mass of an oil and fat.

12. A method for improving flavor of a yeast material, comprising reducing a total content of heptanal, octanal, and nonanal, which are linear saturated aliphatic aldehydes having 7 to 9 carbon atoms contained in the yeast material.

13. The method for improving flavor according to claim 12, comprising reducing the total content of heptanal, octanal, and nonanal, which are linear saturated aliphatic aldehydes having 7 to 9 carbon atoms contained in the yeast material, by 50% or more.

14. The method for improving flavor according to claim 12 or 13, comprising reducing the total content of heptanal, octanal, and nonanal, which are linear saturated aliphatic aldehydes having 7 to 9 carbon atoms contained in the yeast material, to 3.8 ppm or less based on a dry mass of the base material.

15. The method for improving flavor according to claim 12 or 13, comprising reducing heptanal to 1.50 ppm or less, octanal to 0.37 ppm or less, and/or nonanal to 2.02 ppm or less, contained in the yeast material, based on the dry mass of the yeast material.

16. The method for improving flavor according to claim 12 or 13, wherein the yeast material is a yeast cell body residue or a decomposition product of a yeast cell body residue with a cell-wall lytic enzyme.

17. A yeast material improved in flavor by the method for improving flavor according to claim 12 or 13.

18. A method for improving flavor of a milk-substitute composition, in case a milk-substitute composition comprising a yeast cell body residue, comprising reducing a total content of heptanal, octanal, and nonanal, which are linear saturated aliphatic aldehydes having 7 to 9 carbon atoms contained in the residue.

19. The method for improving flavor according to claim 18, comprising reducing the total content of heptanal, octanal, and nonanal, which are linear saturated aliphatic aldehydes having 7 to 9 carbon atoms contained in the residue, by 50% or more.

20. The method for improving flavor according to claim 18 or 19, comprising reducing the total content of heptanal, octanal, and nonanal, which are linear saturated aliphatic aldehydes having 7 to 9 carbon atoms contained in the residue, to 3.8 ppm or less based on the dry mass of the residue.

21. The method for improving flavor according to claim 18 or 19, comprising reducing a content of heptanal to 1.50 ppm or less, a content of octanal to 0.37 ppm or less, and/or a content of nonanal to 2.02 ppm or less, contained in the residue, based on the dry mass of the residue.

22. A method for improving flavor of a milk-substitute composition, in case a milk-substitute composition comprising a decomposition product of a yeast cell body residue with a cell-wall lytic enzyme, comprising reducing a total content of heptanal, octanal, and nonanal, which are linear saturated aliphatic aldehydes having 7 to 9 carbon atoms contained in the residue, followed by treating the residue with a cell-wall lytic enzyme.

23. The method for improving flavor of a milk-substitute composition according to claim 22, comprising reducing the total content of heptanal, octanal, and nonanal, which are linear saturated aliphatic aldehydes having 7 to 9 carbon atoms contained in the residue, by 50% or more, followed by treating the residue with a cell-wall lytic enzyme.

24. The method for improving flavor of a milk-substitute composition according to claim 22 or 23, comprising reducing the total content of heptanal, octanal, and nonanal, which are linear saturated aliphatic aldehydes having 7 to 9 carbon atoms contained in the residue, to 3.8 ppm or less based on the dry mass of the residue, followed by treating the residue with a cell-wall lytic enzyme.

25. The method for improving flavor of a milk-substitute composition according to claim 22 or 23, comprising reducing a content of heptanal to 1.50 ppm or less, a content of octanal to 0.37 ppm or less, and/or a content of nonanal to 2.02 ppm or less, contained in the residue, based on the dry mass of the residue, followed by treating the residue with a cell-wall lytic enzyme.

Fig. 1

Fig. 2

Fig. 3

Fig. 4

Fig. 5

Fig. 6

Fig. 7

Fig. 8

## INTERNATIONAL SEARCH REPORT

| International application No. |
|---|
| **PCT/JP2024/025901** |

| | |
|---|---|
| **A.** | **CLASSIFICATION OF SUBJECT MATTER** |

*A23C 11/10*(2021.01)i; *A23L 5/00*(2016.01)i; *A23L 31/15*(2016.01)i
FI:  A23C11/10; A23L5/00 J; A23L31/15

According to International Patent Classification (IPC) or to both national classification and IPC

| | |
|---|---|
| **B.** | **FIELDS SEARCHED** |

Minimum documentation searched (classification system followed by classification symbols)

A23C11/10; A23L5/00; A23L31/15

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2022-135934 A (ASAHI GROUP FOODS, LTD.) 15 September 2022 (2022-09-15) claims, paragraphs [0043]-[0048], examples | 1-25 |
| Y | JP 09-205999 A (KAGOME CO.,LTD.) 12 August 1997 (1997-08-12) claims, paragraphs [0020]-[0022], examples | 1-25 |
| A | JP 2007-252239 A (ASAHI BREWERIES, LTD.) 04 October 2007 (2007-10-04) entire text, all drawings | 1-25 |
| A | JP 2018-078863 A (B FOOD SCIENCE CO., LTD.) 24 May 2018 (2018-05-24) entire text, all drawings | 1-25 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 September 2024** | **24 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/025901**

| Patent document cited in search report | | | Publication date (day/month/year) | Patent family member(s) | | | Publication date (day/month/year) |
|---|---|---|---|---|---|---|---|
| JP | 2022-135934 | A | 15 September 2022 | US 2024/0138456 A1 claims, paragraphs [0072]-[0077], examples WO 2022/185762 A1 EP 4303284 A1 CN 117015312 A KR 10-2023-0152686 A | | | |
| JP | 09-205999 | A | 12 August 1997 | (Family: none) | | | |
| JP | 2007-252239 | A | 04 October 2007 | (Family: none) | | | |
| JP | 2018-078863 | A | 24 May 2018 | (Family: none) | | | |

Form PCT/ISA/210 (patent family annex) (July 2022)

**REFERENCES CITED IN THE DESCRIPTION**

**Patent documents cited in the description**

- JP 2022135934 A